# EUROPÄISCHE PATENTANMELDUNG

(11) **EP 1 362 504 A1**
(43) Veröffentlichungstag der Anmeldung: **19.11.2003**
(21) Anmeldenummer: 03101282.6
(22) Anmeldetag: 08.05.2003
(51) Int. Cl.: A01D 41/14, A01D 45/02

(54) **Maschine zum Mähen von stängelartigem Erntegut**

(30) Priorität: 17.05.2002 DE 10221983
(71) Anmelder: Maschinenfabrik Kemper GmbH & Co. KG, 48973 Stadtlohn (DE)
(72) Erfinder: Böckmann, Norbert, 48703 Stadtlohn (DE); Bongert, Dirk, 48703 Stadtlohn (DE)
(74) Vertreter: Holst, Sönke, Dr.

(57) **Zusammenfassung**

Die Erfindung bezieht sich auf einen Erntevorsatz (10), mit einem mittleren Rahmenteil (24) und zwei an dessen seitlichen Enden angebrachten äußeren Rahmenteilen (22), die gegenüber dem mittleren Rahmenteil (24) zwischen einer Betriebsstellung und einer Transportstellung schwenkbar sind, wobei der mittlere Rahmenteil (24) und die äußeren Rahmenteile (22) Einzugseinrichtungen (12, 14, 16) zum Einziehen von Erntegut tragen und jeweils eine selbstständig zwischen einer Betriebsstellung und einer Transportstellung bewegliche Teilerspitze (34, 40) im Schwenkbereich zwischen dem mittleren Rahmenteil (24) und den äußeren Rahmenteilen (22) angeordnet ist.

Es wird vorgeschlagen, dass die im Schwenkbereich zwischen dem mittleren Rahmenteil (24) und den äußeren Rahmenteilen (22) angeordneten Teilerspitzen (34, 40) zwischen der Betriebsstellung und der Transportstellung in horizontaler Richtung quer zur Fahrtrichtung verschiebbar und/oder um die Hochachse verschwenkbar sind.

## Beschreibung

Die Erfindung betrifft einen Erntevorsatz, mit einem mittleren Rahmenteil und zwei an dessen seitlichen Enden angebrachten äußeren Rahmenteilen, die gegenüber dem mittleren Rahmenteil zwischen einer Betriebsstellung und einer Transportstellung schwenkbar sind, wobei der mittlere Rahmenteil und die äußeren Rahmenteile Einzugseinrichtungen zum Einziehen von Erntegut tragen und jeweils eine selbstständig zwischen einer Betriebsstellung und einer Transportstellung bewegliche Teilerspitze im Schwenkbereich zwischen dem mittleren Rahmenteil und den äußeren Rahmenteilen angeordnet ist.

Die DE 73 42 482 U beschreibt einen einteiligen Maispflückvorsatz, bei dem die äußeren Teilerspitzen in seitlicher Richtung zwischen einer Transport- und einer Betriebsstellung verschiebbar sind. Diese Lösung eignet sich nur für relativ geringe Arbeitsbreiten.

In der EP 0 534 199 A wird ein Maiserntegerät für Feldhäcksler mit acht Einzugskanälen beschrieben. Die mittleren vier Einzugskanäle sind starr mit der Erntemaschine verbunden, während die jeweils zwei Einzugskanäle an beiden Außenseiten nach oben in eine Transportstellung verschwenkbar sind. Da sich die Einzugskanäle schräg nach außen erstrecken, erweist es sich zur Vermeidung von Kollisionen als sinnvoll, die schwenkbaren Einzugskanäle zunächst seitlich nach außen zu verschieben, bevor sie verschwenkt werden. Hier werden die äußeren Einzugskanäle insgesamt verschoben und verschwenkt, so dass für jede Seite zwei hinreichend große Hydraulikzylinder bzw. Motore erforderlich sind.

Die EP 1 142 467 A beschreibt einen Erntevorsatz in Form eines Pflückers, bei dem Seitenrahmenteile gegenüber dem Mittelrahmenteil hochschwenkbar sind. Ein Abdeckelement ist im Schwenkbereich zwischen dem Mittelrahmenteil und dem Seitenrahmenteil angeordnet. Es ist schwenkbar an einem Zwischenrahmen angebracht und eine in Fahrtrichtung weisende Achse verbindet den Zwischenrahmen schwenkbeweglich mit dem Hauptrahmen. Bevor das Seitenrahmenteil in die Transportstellung verbracht wird, wird das Abdeckelement durch Drehung des Zwischenrahmens in eine Kollisionen vermeidende Stellung gedreht. Bei diesem Erntevorsatz ist als nachteilig anzusehen, dass der Mechanismus mit dem Zwischenrahmen recht aufwändig ist.

In der EP 1 179 292 A ist ein anderer Erntevorsatz beschrieben, bei dem die äußersten Teilerspitzen in der Transportposition nach außen verschwenkt werden, um Kollisionen zwischen diesen Teilerspitzen oberhalb des Hauptrahmens zu vermeiden. Dadurch wird aber nicht die Transportbreite verändert.

Die der Erfindung zugrunde liegende Aufgabe wird darin gesehen, einen Erntevorsatz bereitzustellen, dessen Transportbreite auf einfache Weise reduzierbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz weist einen mittleren Rahmenteil und an dessen äußeren Enden schwenkbar angebrachte äußere Rahmenteile auf. Die Rahmenteile sind jeweils mit einer beliebigen Anzahl an Einzugseinrichtungen zum Einziehen von Erntegut ausgestattet. Dabei kann es sich um Pflückeinrichtungen eines Pflückers oder um Mähtrommeln eines Maisgebisses handeln. Die äußeren Rahmenteile sind um horizontale, sich in Fahrtrichtung erstreckende Achsen in eine Transportstellung nach oben und in der Regel nach innen, d.h. um etwa 180° verschwenkbar. In den beiden Bereichen der Schwenklagerung zwischen den äußeren Rahmenteilen und dem mittleren Rahmenteil sind Teilerspitzen angeordnet, die zum seitlichen Ablenken von Pflanzen dienen. Diese Teilerspitzen sind unabhängig von den anderen Rahmenteilen zwischen einer Betriebsstellung und einer Transportstellung beweglich. Es wird vorgeschlagen, dass diese Teilerspitzen in seitlicher Richtung verschiebbar und/oder um die Hochachse verschwenkbar sind, um sie zwischen der Betriebsstellung und der Transportstellung zu bewegen. Sie können somit derart bewegt werden, dass sie in der Transportstellung nach innen verlagert sind.

Auf diese Weise erreicht man, dass der Erntevorsatz auf einfache Weise in eine kompakte Transportstellung verstellbar ist und kann beim Schwenken der äußeren Rahmenteile Kollisionen der Teilerspitzen mit den Rahmenteilen bzw. umgekehrt vermeiden.

Bestimmte Einzugseinrichtungen sind bezüglich ihrer Längsmittelebene unsymmetrisch, wie Einzugs- und Pflückeinrichtungen mit um die Hochachse rotierenden Mitnehmern, neben denen ein Pflückspalt angeordnet ist. Zur Produktionsvereinfachung ist es sinnvoll, für den gesamten Erntevorsatz oder zumindest für den mittleren Rahmenteil nur gleichartige Einzugseinrichtungen zu verwenden. Bei derartigen Einzugseinrichtungen kann es problematisch sein, wenn beide im Schwenkbereich zwischen dem mittleren Rahmenteil und dem äußeren Rahmenteil angeordneten Teilerspitzen am Mittelteil abgestützt sind, da bei einer der Teilerspitzen Kollisionen mit der benachbarten Einzugseinrichtung denkbar sind. Insbesondere für derartige Einzugseinrichtungen bietet es sich an, eine dieser Teilerspitzen am äußeren Rahmenteil zu befestigen, während die andere Teilerspitze am mittleren Rahmenteil angebracht ist. Dadurch wird die am äußeren Rahmenteil angebrachte Teilerspitze mit dem äußeren Rahmenteil in dessen Transportstellung verschwenkt und kann in ihrer Transportstellung nicht mit der benachbarten Einzugseinrichtung des Mittelteils kollidieren, während die am mittleren Rahmenteil angebrachte Teilerspitze nicht mitverschwenkt wird.

Bei einer derartigen Ausführungsform werden die Teilerspitzen im Schwenkbereich zwischen den äußeren Rahmenteilen und dem inneren Rahmenteil derart bewegt, dass sie in der Transportstellung nach innen verlagert sind. Wenn sie in ihre Transportstellung bewegt werden, bevor die äußeren Rahmenteile in die Transportstellung verschwenkt werden, erfolgen ihre Bewegungen in dieselbe Richtung, anderenfalls entgegengesetzt.

Befinden sich die äußeren Rahmenteile und die in ihrem Schwenkbereich angeordneten Teilerspitzen in der Betriebsstellung, sind bei einem Verschwenken der äußeren Rahmenteile in die Transportstellung Kollisionen mit den Teilerspitzen im Schwenkbereich denkbar. Vorzugsweise werden daher letztere zuerst in ihre Transportstellung verbracht, bevor die äußeren Rahmenteile verschwenkt werden. Die Schwenkmittel zum Verschwenken der äußeren Rahmenteile werden daher erst dann aktiviert, wenn die Einrichtungen zum Bewegen der Teilerspitzen letztere in ihre Transportstellung verbracht haben. Analog werden erst die äußeren Rahmenteile abgesenkt, bevor die Teilerspitzen in ihre Betriebsstellung bewegt werden.

Die Einrichtungen zum Bewegen der Teilerspitze können außerdem Mittel aufweisen, um die äußeren Rahmenteile in der Betriebsstellung am inneren Rahmenteil zu arretieren. Somit wird die Arretierung der äußeren Rahmenteile selbsttätig gelöst, wenn die Teilerspitzen in die Transportstellung verbracht werden, und selbstständig wieder hergestellt, wenn die Teilerspitzen in die Betriebsstellung gelangen.

In den Zeichnungen ist ein nachfolgend näher beschriebenes Ausführungsbeispiel der Erfindung dargestellt. Es zeigt:
- Fig. 1: einen erfindungsgemäßen Erntevorsatz,
- Fig. 2: ein Schema, das die Bewegung des Erntevorsatzes zwischen der Betriebs- und der Transportstellung darstellt, und
- Fig. 3: eine rückwärtige Ansicht einer Teilerspitze mit einem Verschiebemechanismus.

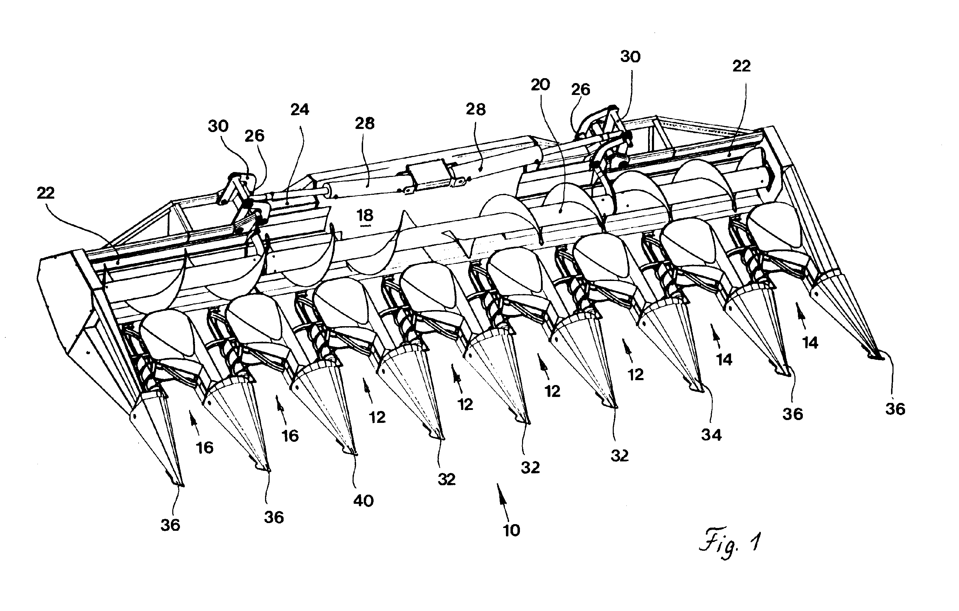

In der Figur 1 ist eine perspektivische Ansicht eines Erntevorsatzes 10 dargestellt, der sich zur Ernte von Mais, Sonnenblumen und anderen stängelartigen Pflanzen eignet. Der Erntevorsatz 10 umfasst acht gleichartige, seitlich nebeneinander angeordnete Einzugseinrichtungen 12, 14, 16 mit zugeordneten Pflückeinrichtungen, die zum Einziehen von Pflanzen dienen. Die Pflückeinrichtungen trennen die Fruchtstände von den Pflanzen ab, die durch eine an der Rückseite der Einzugseinrichtungen 12, 14, 16 angeordnete Querförderschnecke 20 einer mittigen Übergabeöffnung 18 zugeführt werden, wo sie vom Schrägförderer eines den Erntevorsatz 10 über ein Feld bewegenden Mähdreschers oder vom Einzugskanal eines Feldhäckslers übernommen werden. Die Pflanzenreste werden gehäckselt oder ganz auf dem Feld abgelegt. Die Einzugseinrichtungen 12, 14, 16 umfassen um eine horizontale Achse rotierende Mitnehmer, die die Pflanzenstängel erfassen und über die Länge des Pflückspalts transportieren, in den sie durch zusammenwirkende Pflückwalzen nach unten eingezogen werden. Der Aufbau der einzelnen Einzugseinrichtungen ist in der DE 101 51 198 A beschrieben, deren Offenbarung durch Verweis mitaufgenommen wird. Die Einzugseinrichtungen sind zu ihrer Längsmittelebene unsymmetrisch, da der Pflückspalt seitlich neben dem Mitnehmer angeordnet ist.

Der Erntevorsatz 10 ist zwischen einer Betriebsstellung, wie sie in Figur 1 dargestellt ist, und einer Transportstellung verstellbar. Jeweils die beiden äußeren Einzugseinrichtungen 14, 16 und äußere Teile der Querförderschnecke 20 sind an äußeren Rahmenteilen 22 befestigt, die um horizontale, in Fahrtrichtung verlaufende Schwenkachsen 26 schwenkbar an einem mittleren Rahmenteil 24 angelenkt sind, der die mittleren Einzugseinrichtungen 12 trägt. Durch beidseits der Längsmittelebene des Erntevorsatzes 10 am mittleren Rahmenteil 24 angelenkte hydraulische Schwenkzylinder 28, die durch Kopplungszusammenbauten 30 mit den äußeren Rahmenteilen 22 gekoppelt sind, sind die äußeren Rahmenteile 22 um die Schwenkachsen 26 nach oben und nach innen klappbar, so dass sie in der Transportstellung über den mittleren Rahmenteil 24 gelegt sind. In der Transportstellung befinden sich somit die äußeren Einzugseinrichtungen 14, 16 oberhalb der inneren Einzugs- und Pflückeinheiten 12. Auf diese Weise erreicht man, dass der Mähdrescher am Straßenverkehr teilnehmen kann, ohne dass der Erntevorsatz 10 vom Schrägförderer abzunehmen und auf einem Wagen o. dgl. zu verladen wäre.

Jeweils zwischen benachbarten Einzugseinrichtungen 12, 14, 16 und an den Außenseiten der jeweils äußersten Einzugseinrichtungen 16 sind den Einzugseinrichtungen 12, 14, 16 Teilerspitzen 32 - 40 in Fahrtrichtung vorgelagert. Sie dienen dazu, die Pflanzen seitlich abzulenken, damit sie von den Mitnehmern der Einzugseinrichtungen 12, 14, , 16 erfasst und in den Pflückspalt eingezogen werden.

Wären die zwischen dem mittleren Rahmenteil 24 und den äußeren Rahmenteilen 22 angeordneten Teilerspitzen 34 und 40 starr am mittleren Rahmenteil 24 befestigt, würden sie die Transportbreite des Erntevorsatzes 10 definieren. Bei einer Arbeitsbreite der einzelnen Einzugseinrichtungen 12, 14, 16 von jeweils 0,75 m wären zulässige Transportbreiten, die derzeit in Deutschland 3,5 m betragen, nicht oder nur schwer einhaltbar. Außerdem wären Kollisionen der mit den äußeren Rahmenteilen 22 hochschwenkenden Einzugseinrichtungen 14, 16 mit den Teilerspitzen 34, 40 zu befürchten. Aus diesen Gründen sind die Teilerspitzen 34 und 40 seitlich verschiebbar angebracht. Die am bezüglich der Fahrtrichtung linken Rand des mittleren Rahmenteils 24 angeordnete Teilerspitze 34 wird aus der in Figur 1 dargestellten Stellung nach rechts verschoben, wenn der Erntevorsatz 10 in die Transportstellung verbracht wird. Sie ist am mittleren Rahmenteil 24 befestigt. Die in Fahrtrichtung unmittelbar links neben der linken Einzugseinrichtung 16 des rechten äußeren Rahmenteils 22 angeordnete Teilerspitze 40 wird ebenfalls nach rechts verschoben, wenn der Erntevorsatz 10 in die Transportstellung verbracht wird. Sie ist am rechten äußeren Rahmenteil 22 abgestützt und wird gemeinsam damit nach oben und innen verschwenkt. Wäre sie am mittleren Rahmenteil 24 angebracht, könnte sie wegen einer drohenden Kollision mit der benachbarten Einzugseinrichtung 12 nicht ohne Weiteres in Richtung auf die Mitte des Erntevorsatzes 10 zu verschiebbar sein.

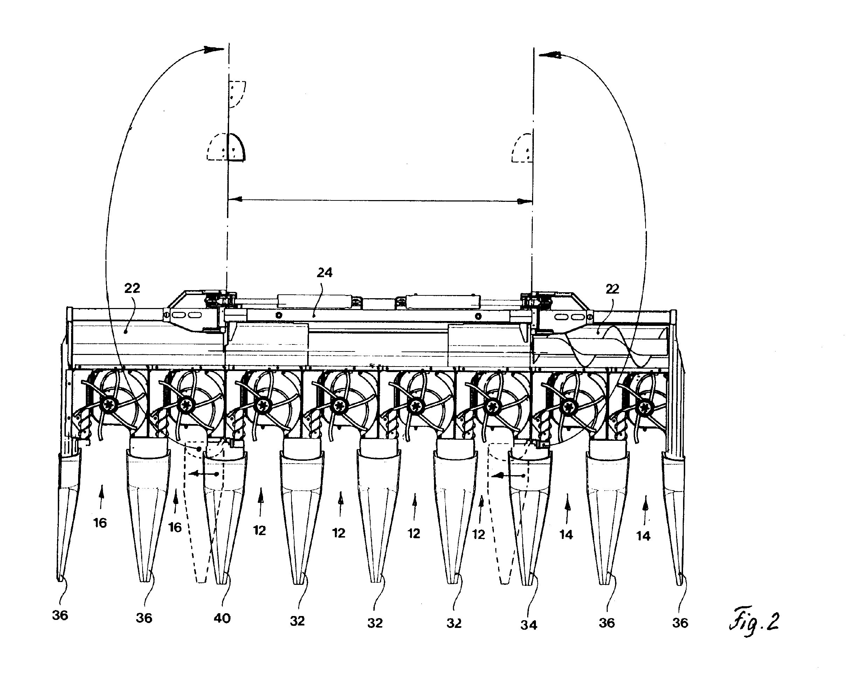

Diese Bewegung zwischen Betriebs- und Transportstellung und umgekehrt ist in der Figur 2 schematisch dargestellt, anhand der auch erkennbar ist, dass die Teilerspitzen 34 und 40 die Breite des Erntevorsatzes 10 in der Transportstellung nicht beeinflussen. Im oberen Bereich der Figur 2 sind Aufnahmen der Teilerspitzen, d. h. in ihrem rückwärtigen Bereich angeordnete Halterungselemente schematisch dargestellt. Man erkennt, dass auch die geteilten Aufnahmen der Teilerspitzen 34 und 40 nicht über die Breite des mittleren Rahmenteils 24 hinausragen.

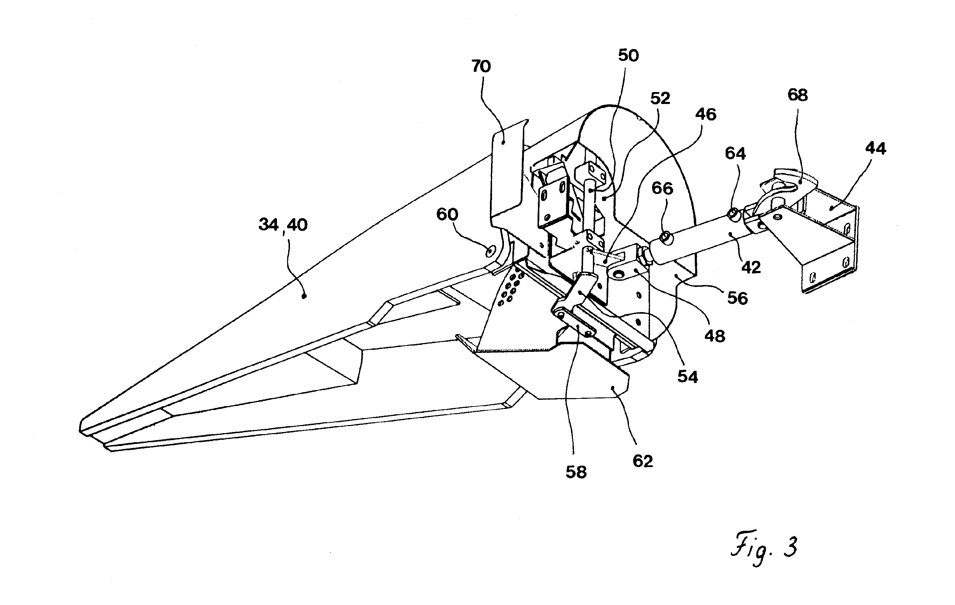

Die Teilerspitzen 34, 40 sind durch jeweils einen ihnen zugeordneten Hydraulikzylinder 42 verschiebbar, der in der Figur 3 gemeinsam mit einer der Teilerspitzen 34, , 40 dargestellt ist. Der Hydraulikzylinder 42 ist an seinem in Fahrtrichtung rückwärtigen Ende an einer Konsole 44 angelenkt, die bei der Teilerspitze 34 am mittleren Rahmenteil 24 und bei der Teilerspitze 40 am äußeren Rahmenteil 22 befestigt ist. Der Hydraulikzylinder 42 ist an seinem in Fahrtrichtung vorderen Ende über eine Gabel 48 an einem Schwenkarm 46 angelenkt, der starr mit einer Stange 50 verbunden ist. Die Stange 50 erstreckt sich etwa vertikal und ist um ihre Längsachse drehbar an einer Platte 52 gelagert. Die Platte 52 ist bei der Teilerspitze 34 mit dem mittleren Rahmenteil 24 und bei der Teilerspitze 40 mit dem äußeren Rahmenteil 22 verbunden. An ihrem unteren Ende ist die Stange 50 mit einem Schwenkarm 54 starr verbunden, der an seinem anderen Ende über eine Verbindungsschiene 58 mit einem Lagerbock 56 gekoppelt ist, an der die Teilerspitze 34, 40 befestigt ist. Der Lagerbock 56 ist in seitlicher Richtung verschiebbar an der Platte 52 gelagert. Die Teilerspitze 34, 40 ist am Lagerbock 56 um eine horizontale, sich quer zur Fahrtrichtung erstreckende Achse 60 schwenkbar angelenkt, so dass sie beim Überfahren von Bodenunebenheiten angehoben wird. Am Lagerbock 56 ist eine Gleitkufe 62 befestigt, die sich an der Unterseite des Erntevorsatzes 10 befindet und auf der er sich beim Erntebetrieb abstützt.

Wird die rückwärtige Kammer des doppeltwirkenden Hydraulikzylinders 42 am Anschluss 64 beaufschlagt, wird die Teilerspitze 34, 40 nach links in die Betriebsstellung verschoben. Wird die vordere Kammer des Hydraulikzylinders 42 beaufschlagt, wird die Teilerspitze 34, 40 nach rechts in die Transportstellung verschoben. Dabei dreht sich der Hydraulikzylinder 42 an seinem rückwärtigen Ende in der Konsole 44. Mit diesem Ende des Hydraulikzylinders 42 ist ein Sperrhaken 68 verbunden, der sich somit ebenfalls dreht, wenn die Teilerspitze 34, 40 zwischen Betriebsund Transportstellung bewegt wird. Der Sperrhaken 68 des Hydraulikzylinders 42 der Teilerspitze 40 hintergreift in der Betriebsstellung ein entsprechendes Verriegelungselement am mittleren Rahmenteil 24 und der Sperrhaken 68 des Hydraulikzylinders 42 der Teilerspitze 34 hintergreift in der Betriebsstellung ein entsprechendes Verriegelungselement am linken Rahmenteil 22. Dadurch erhält man in der Betriebsstellung ohne zusätzliche aktive Elemente eine selbsttätige Verriegelung der äußeren Rahmenteile 22 am mittleren Rahmenteil 22. Ein Blech 70 links neben der Rückseite der Teilerspitze 34, 40 dient zum Schutz einer oberen Einzugsschnecke der Einzugseinrichtung 12, 14, 16.

Um den Erntevorsatz 10 aus der Betriebsstellung in die Transportstellung zu verbringen, werden zunächst die Hydraulikzylinder 42 beaufschlagt, um die Teilerspitzen 34 und 40 gegenüber der Fahrtrichtung nach rechts zu verschieben und die Sperrhaken 68 zu lösen. Sobald geeignete Sensoren Signale abgeben, dass die Hydraulikzylinder 42 die Teilerspitzen 34, 40 in die Transportstellung verbracht haben, werden die Schwenkzylinder 28 aktiviert, um die äußeren Rahmenteile 22 nach oben und nach innen zu verschwenken. Die Bewegung des Erntevorsatzes 10 in die Betriebsstellung erfolgt in umgekehrter Reihenfolge, wobei das Erreichen der Betriebsstellung der äußeren Rahmenteile 22 durch geeignete Sensoren erfasst wird, die dann die Aktivierung der Hydraulikzylinder 42 veranlassen, welche die Teilerspitzen in ihre Betriebsstellung verbringen und die Sperrhaken 68 an den Verriegelungselementen arretieren.

## Patentansprüche

1. Erntevorsatz (10), mit einem mittleren Rahmenteil (24) und zwei an dessen seitlichen Enden angebrachten äußeren Rahmenteilen (22), die gegenüber dem mittleren Rahmenteil (24) zwischen einer Betriebsstellung und einer Transportstellung schwenkbar sind, wobei der mittlere Rahmenteil (24) und die äußeren Rahmenteile (22) Einzugseinrichtungen (12, 14, 16) zum Einziehen von Erntegut tragen und jeweils eine selbstständig zwischen einer Betriebsstellung und einer Transportstellung bewegliche Teilerspitze (34, 40) im Schwenkbereich zwischen dem mittleren Rahmenteil (24) und den äußeren Rahmenteilen (22) angeordnet ist, **dadurch gekennzeichnet, dass** die im Schwenkbereich zwischen dem mittleren Rahmenteil (24) und den äußeren Rahmenteilen (22) angeordneten Teilerspitzen (34, 40) zwischen der Betriebsstellung und der Transportstellung in horizontaler Richtung quer zur Fahrtrichtung verschiebbar und/oder um die Hochachse verschwenkbar sind.

2. Erntevorsatz nach Anspruch 1, **dadurch gekennzeichnet, dass** zumindest die Einzugseinrichtungen (12) des mittleren Rahmenteils (24) bezüglich ihrer Längsmittelebene unsymmetrisch und gleichartig sind.

3. Erntevorsatz nach Anspruch 1 oder 2, **dadurch gekennzeichnet, dass** eine der im Schwenkbereich zwischen dem mittleren Rahmenteil (24) und den äußeren Rahmenteilen (22) angeordneten Teilerspitzen (34) am mittleren Rahmenteil (24) und die andere der im Schwenkbereich zwischen dem mittleren Rahmenteil (24) und den äußeren Rahmenteilen (22) angeordneten Teilerspitzen (40) am äußeren Rahmenteil (22) angebracht ist.

4. Erntevorsatz nach Anspruch 3, **dadurch gekennzeichnet, dass** die Teilerspitzen (34, 40) in dieselbe Richtung zwischen der Transportstellung und der Betriebsstellung verschiebbar sind.

5. Erntevorsatz nach einem der Ansprüche 1 bis 4, **dadurch gekennzeichnet, dass** Einrichtungen zum Bewegen der Teilerspitzen (34, 40) zwischen der Betriebsstellung und der Transportstellung vorgesehen sind, die derart mit Schwenkmitteln zum Verschwenken der äußeren Rahmenteile (22) gekoppelt sind, dass die Schwenkmittel erst dann die Außenrahmen aus der Betriebsstellung in die Transportstellung verbringen, wenn die Einrichtungen zum Bewegen der Teilerspitzen (34, 40) die Teilerspitzen (34, 40) in die Transportstellung verbracht haben.

6. Erntevorsatz nach Anspruch 5, **dadurch gekennzeichnet, dass** die Einrichtungen zum Bewegen der Teilerspitzen (34, 40) derart mit den Schwenkmitteln zum Verschwenken der äußeren Rahmenteile (22) gekoppelt sind, dass die Einrichtungen zum Bewegen der Teilerspitzen (34, 40) die Teilerspitzen (34, 40) erst dann aus der Transportstellung in die Betriebsstellung verbringen, wenn die Schwenkmittel die Außenrahmen aus der Transportstellung in die Betriebsstellung verbracht haben.

7. Erntevorsatz nach einem der Ansprüche 1 bis 6, **dadurch gekennzeichnet, dass** Einrichtungen zum Bewegen der Teilerspitzen (34, 40) zwischen der Betriebsstellung und der Transportstellung vorgesehen sind, die eingerichtet sind, die äußeren Rahmenteile (22) in der Betriebsstellung an mittleren Rahmenteilen (24) zu arretieren.
